# EUROPEAN PATENT SPECIFICATION

(11) **EP 2 722 649 B1**
(45) Date of publication and mention of the grant of the patent: **05.12.2018**
(21) Application number: 13187511.4
(22) Date of filing: 07.10.2013
(51) Int. Cl.: G01D 5/14, G01D 5/245, G01D 5/244

(54) **Magnetic encoder**
Magnetcodierer
Codeur magnétique

(30) Priority: 17.10.2012 JP 2012229844
(43) Date of publication of application: 23.04.2014
(73) Proprietor: Alps Electric Co., Ltd., Tokyo 145-8501 (JP)
(72) Inventor: Onodera, Takashi, Tokyo Tokyo 145-8501 (JP); Nakamura, Tokuo, Tokyo Tokyo 145-8501 (JP)
(74) Representative: Schmitt-Nilson Schraud Waibel Wohlfrom Patentanwälte Partnerschaft mbB

(56) References cited:
- JP-A- S6 444 816
- US-A- 5 036 276

## Description

### BACKGROUND OF THE INVENTION

### 1. Field of the Invention

The present invention relates to a magnetic encoder including a magnet (magnetic field generating member) and a magnetic sensor.

### 2. Description of the Related Art

Examples of art related to a magnetic encoder including a magnet and a magnetic sensor are disclosed in International Publication No. WO 2009/051069, Japanese Unexamined Patent Application Publication No. 2004-309366, International Publication No. WO 2011/111494, and Japanese Unexamined Patent Application Publication No. 2007-199007.

A phase signal, such as a U, V, or W signal, for a three-phase motor can be obtained from a magnetic sensor in accordance with rotation of a magnet. The phase signal allows, for example, control of current in a brushless motor.

Finer control requires a high resolution signal, obtained by subdivision, in addition to the phase signals.

For example, a related-art apparatus is configured to include an optical encoder in addition to a magnetic encoder in order to obtain a high resolution signal. Such a configuration leads to an increase in the number of parts. Disadvantageously, this results in an increase in size and production cost of the apparatus.

US 5 036 276 A discloses a magnetic encoder with high resolution of data signal recording at reduced recording pitch. The magnetic encoder comprises a sensor having a plurality of magnetoresistive (MR) elements placed in juxtaposed position relative to a magnetic recording medium upon which data signals are recorded employing a recording pitch, A. Output signals produced by the MR elements connected in a plurality of bridge circuits are formed by relative movement between the MR elements and the magnetic recording medium. The MR elements are positioned at A/n intervals, wherein n is an integer and n>/=8. A multiplier circuit is connected to receive the output signals from the MR element bridge circuits and provide a plurality of phase shifted output signals corresponding to a A/N pitch interval of recording pitch, A, wherein N is an integer and N>/=2.

JP S64 44816 A discloses a magnetic rotary encoder. In a magnetic sensor for magnetoelectric conversion, magnetoreristance elements A1-A4 and B1-B4 whose electric resistance is varied in accordance with the intensity of a magnetic field are arranged at an equal pitch Ps as two magnetosensitive elements in one line in the longitudinal direction of the magnetoresistance elements, in such a manner that a structure wherein the magnetoresistance elements are arranged symmetrically with respect to the central axes Cx and Cy in the directions X and Y respectively is obtained. The sensor thus prepared is disposed opposite to a magnetic drum having N-poles and S-poles formed alternately and uniformly at a distance L in multi-pole magnetization, with a gap formed between them. A prescribed voltage is impressed on series-connected circuits of B1 and B2, A2 and A3, and B3 and B4, and the respective intermediate connection points U, V and W are used as voltage detecting terminals. From these terminals, three-phase outputs of U, V and W phases being different in phase at a 120 deg. electrical angle and corresponding to the amount of rotating movement of the drum can be obtained by one pulse for each one of the Nor S-poles.

The present invention relates to a magnetic encoder according to the appended claims.

### SUMMARY OF THE INVENTION

The present invention has been made to overcome the above-described disadvantages and provides a magnetic encoder capable of obtaining phase signals and a high resolution signal using a single magnetic field generating member.

The present invention provides a magnetic encoder including a magnetic field generating member having different magnetic poles magnetized alternately in a moving direction, a plurality of magnetic sensors arranged spaced apart from one another in a direction parallel to the moving direction such that the magnetic sensors are not in contact with the magnetic field generating member, and a plurality of channels provided for each of the magnetic sensors, each channel including a magnetic detection element having an electrical characteristic varying depending on an external magnetic field from the magnetic field generating member. The magnetic field generating member enables a phase signal to be generated from each of the magnetic sensors, the phase signals being out of phase, and enables a high resolution signal to be generated based on outputs of the channels such that the high resolution signal includes a plurality of pulses within a wavelength of each phase signal.

Preferably, the high resolution signal includes the pulses at intervals less than a congruent interval obtained by superposing rising edges and falling edges of the phase signals.

Preferably, the magnetic sensors each include a first output terminal from which an output of any of the channels is taken as the phase signal and a second output terminal from which a medium resolution signal is taken, the medium resolution signal being obtained by processing the outputs of the channels through a logic circuit, the medium resolution signal having pulse intervals greater than those of the high resolution signal. Preferably, the medium resolution signals from the second output terminals are output to an open collector or an open drain to generate the high resolution signal.

As described above, according to the invention, the single magnetic field generating member enables both the phase signals and the high resolution signal to be obtained. This facilitates miniaturization of the magnetic encoder, leading to a reduced production cost. Particularly, according to the invention, outputs of the channels are processed by each logic circuit, thus obtaining the medium resolution signal. The medium resolution signals from the second output terminals are output to the open collector, thus obtaining the high resolution signal. Consequently, the high resolution signal can be obtained with high accuracy.

### BRIEF DESCRIPTION OF THE DRAWINGS

Fig. 1 is a plan view of a magnetic encoder according to an embodiment;
Fig. 2 is a plan view of each of magnetic sensors constituting the magnetic encoder according to the embodiment;
Fig. 3 is a circuit diagram of each of magnetic detection chips constituting the magnetic sensor according to the embodiment;
Fig. 4A is a connection diagram of the magnetic sensors;
Fig. 4B is a circuit diagram for a high resolution signal;
Fig. 5 is a waveform chart of phase signals, medium resolution signals, and a high resolution signal in the embodiment;
Fig. 6A is a plan view of each of magnetic detection elements constituting the magnetic detection chip;
Fig. 6B is a plan view of each of other magnetic detection elements constituting the magnetic detection chip; and
Fig. 7 is an enlarged vertical section of part of the magnetic detection element taken along line VII-VII in Fig. 6B as viewed in a direction of arrows.

### DESCRIPTION OF THE PREFERRED EMBODIMENTS

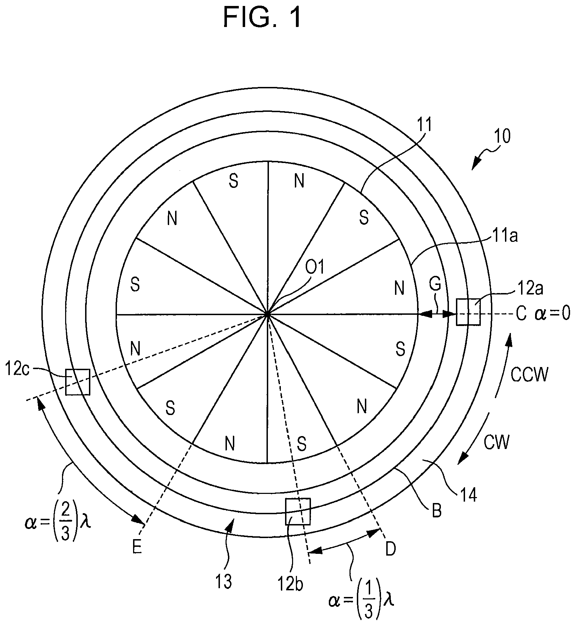

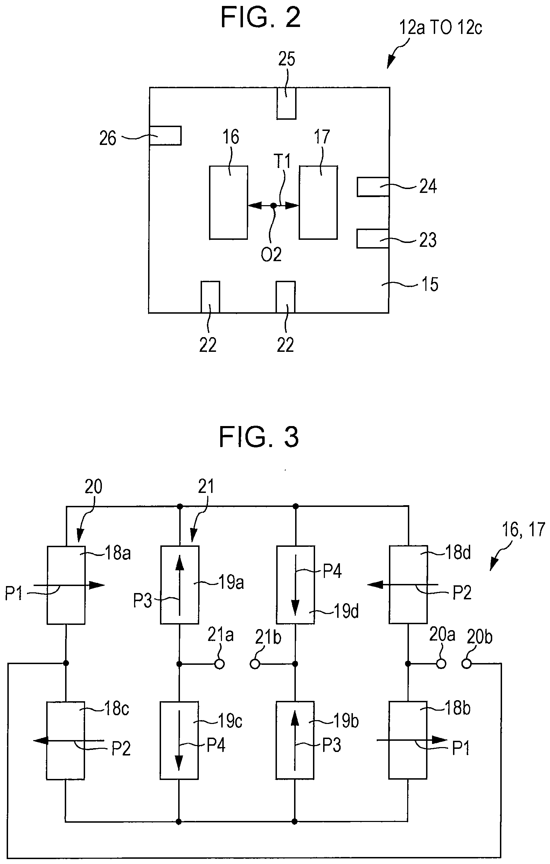

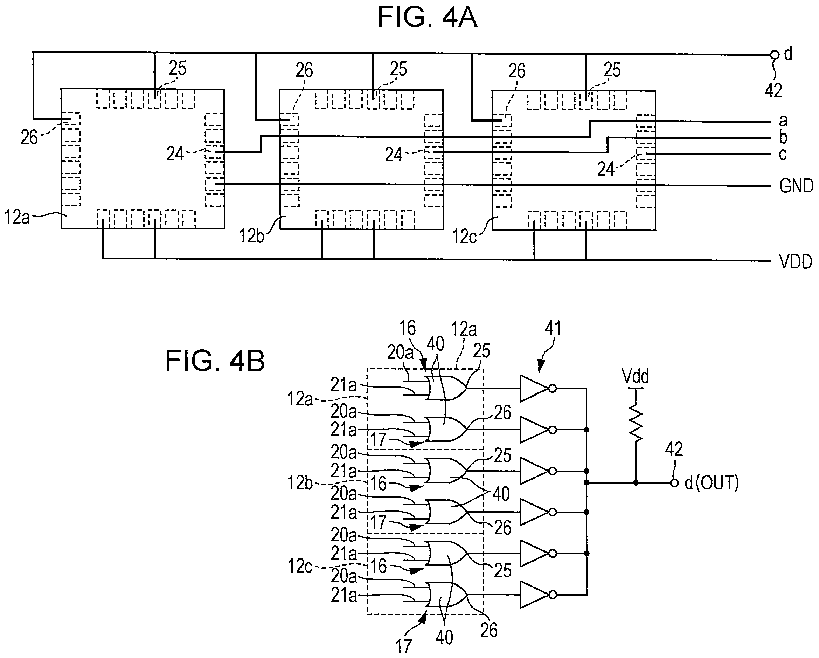

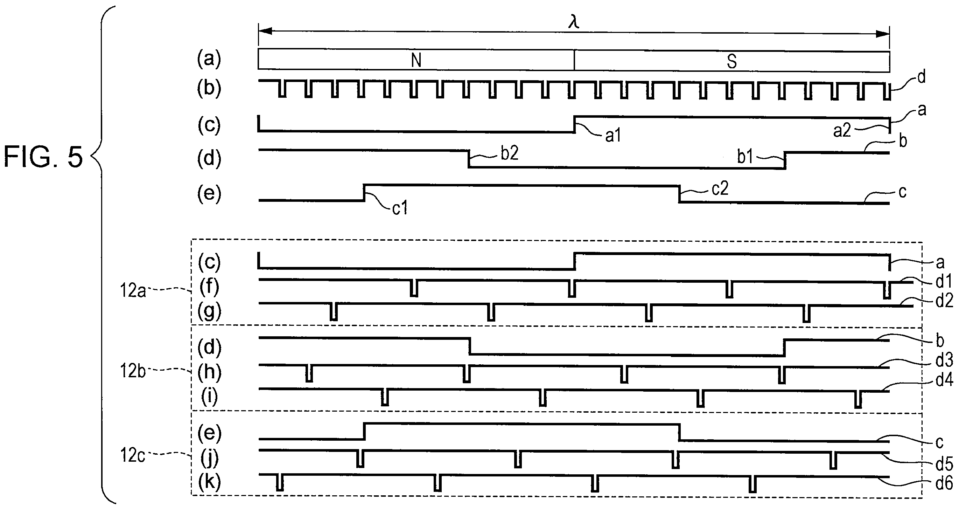

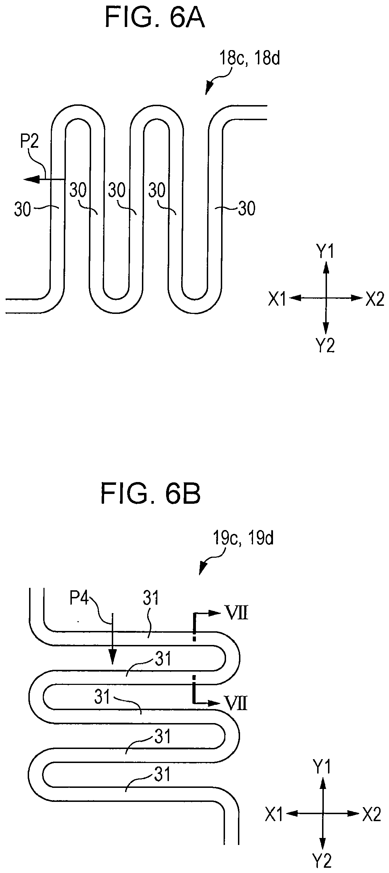

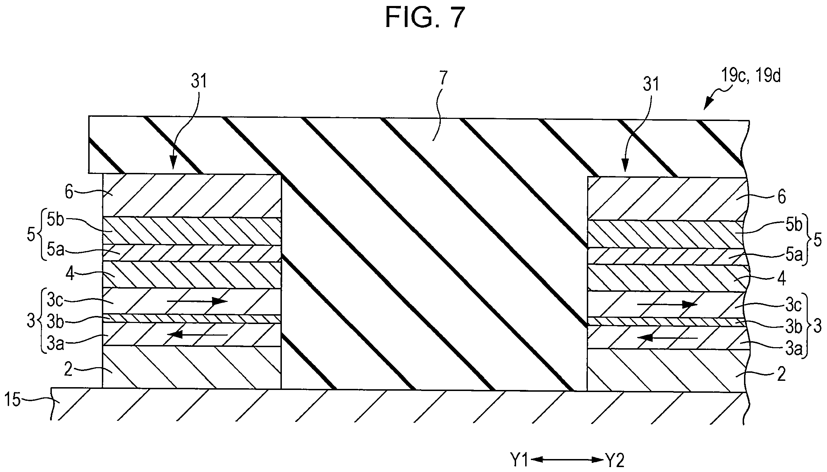

Fig. 1 is a plan view of a magnetic encoder according to an embodiment. Fig. 2 is a plan view of each of magnetic sensors constituting the magnetic encoder according to the present embodiment. Fig. 3 is a circuit diagram of each of magnetic detection chips constituting the magnetic sensor according to this embodiment. Fig. 4A is a connection diagram of the magnetic sensors. Fig. 4B is a circuit diagram for a high resolution signal. Fig. 5 is a waveform chart of phase signals, medium resolution signals, and a high resolution signal in the embodiment. Fig. 6A is a plan view of each of magnetic detection elements constituting the magnetic detection chip. Fig. 6B is a plan view of each of other magnetic detection elements constituting the magnetic detection chip. Fig. 7 is an enlarged vertical section of part of the magnetic detection element taken along line VII-VII in Fig. 6B as viewed in a direction of arrows.

In Fig. 1, a magnetic encoder 10 includes a magnet 11 and a magnetic detection device 13 including a plurality of magnetic sensors 12a to 12c. The magnetic sensors 12a to 12c are fixed to and supported on a support plate 14. The support plate 14 may be shared by the magnetic sensors 12a to 12c. Alternatively, the magnetic sensors 12a to 12c may be mounted on separate support plates and may share an integrated circuit.

In the embodiment illustrated in Fig. 1, the magnet 11 is a disc having a predetermined thickness. Referring to Fig. 1, the magnet 11 has a center O1, serving as a center of rotation. The magnet 11 is supported rotatably in a clockwise direction CW and a counterclockwise direction CCW. As used herein, the term "moving direction" of the magnet 11 is intended to mean a "rotation direction" of the magnet 11 in Fig. 1. The magnet 11 may be configured to be supported rotatably in either of the clockwise direction CW and the counterclockwise direction CCW in Fig. 1.

Referring to Fig. 1, the magnet 11 is configured such that north poles and south poles are alternately magnetized (radially about the center of the magnet 11) in the rotation direction (moving direction) and 12 poles are magnetized on an outer circumferential surface 11a of the magnet 11. The magnet 11 has a radial magnetization. Note that the number of magnetic poles is not limited. The magnet 11 may have an axial magnetization such that the magnetic poles equal in number to those in the above radial magnetization are axially oriented about the center of rotation so as to be alternately magnetized.

As illustrated in Fig. 1, the magnetic sensors 12a to 12c are arranged around the outer circumferential surface 11a of the magnet 11 with a gap G therebetween such that the magnetic sensors 12a to 12c are not in contact with the magnet 11. The magnetic sensors 12a to 12c are arranged spaced apart from one another in a direction (relative rotation direction B) parallel to the rotation direction (the clockwise direction CW or the counterclockwise direction CCW) of the magnet 11. Although the space between the first and second magnetic sensors 12a and 12b is the same as that between the second and third magnetic sensors 12b and 12c, the magnetic sensors 12a to 12c have different phase positions relative to the magnetic poles of the magnet 11. The extent to which the phase positions differ from one another will be described later.

Fig. 2 is a plan view of each of the magnetic sensors 12a to 12c. Referring to Fig. 2, multiple magnetic detection chips 16 and 17 are mounted on a substrate 15. In the embodiment illustrated in Fig. 2, the two magnetic detection chips 16 and 17 are arranged. The magnetic detection chips 16 and 17 are spaced apart from each other by a distance T1. As illustrated in Fig. 2, each of the magnetic sensors 12a to 12c has a center O2 in the relative rotation direction B such that the distance T1 extends along a tangent to the relative rotation direction B. The arrangement of the magnetic detection chips 16 and 17 spaced apart from each other by the distance T1 as illustrated in Fig. 2 can cause a phase difference between outputs of the magnetic detection chips 16 and 17 if the magnetic detection chips 16 and 17 are of the same type.

As illustrated in Fig. 3, each of the magnetic detection chips 16 and 17 includes a plurality of magnetic detection elements 18a to 18d and a plurality of magnetic detection elements 19a to 19d.

Referring to Fig. 3, sensitivity axis directions P1 and P2 of the magnetic detection elements 18a to 18d are different by 90° from sensitivity axis directions P3 and P4 of the magnetic detection elements 19a to 19d. Furthermore, the sensitivity axis direction P1 of the magnetic detection elements 18a and 18b is different by 180° from the sensitivity axis direction P2 of the magnetic detection elements 18c and 18d and the sensitivity axis direction P3 of the magnetic detection elements 19a and 19b is different by 180° from the sensitivity axis direction P4 of the magnetic detection elements 19c and 19d. The term "sensitivity axis direction" is intended to mean a direction in which an electrical characteristic is maximized or minimized when an external magnetic field from the magnet 11 extends.

As illustrated in Fig. 3, the magnetic detection elements 18a to 18d constitute a first channel (bridge circuit) 20 including two signal output terminals 20a and 20b. In addition, the magnetic detection elements 19a to 19d constitute a second channel (bridge circuit) 21 including two signal output terminals 21a and 21b.

As illustrated in Fig. 2, each of the magnetic sensors 12a to 12c includes power supply terminals 22, a ground terminal 23, and output terminals 24 to 26. The power supply terminals 22 and the ground terminal 23 are electrically connected to the channels 20 and 21 in the magnetic detection chips 16 and 17.

The output terminal 24, serving as a first output terminal for a phase signal, is electrically connected to each first channel 20. The other output terminals 25 and 26 each serve as a second output terminal for a high resolution signal. For example, the second output terminal 25 is electrically connected to the signal output terminals 20a and 21a (refer to Fig. 3) of the first and second channels 20 and 21 arranged in the magnetic detection chip 17 illustrated in Fig. 2. In addition, the second output terminal 26 is electrically connected to the signal output terminals 20a and 21a (refer to Fig. 3) of the first and second channels 20 and 21 arranged in the magnetic detection chip 16 illustrated in Fig. 2.

Since the magnetic detection chips 16 and 17 each include the two channels 20 and 21, the magnetic sensors 12a to 12c each include four channels.

Fig. 6A is an enlarged plan view of part of each of the magnetic detection elements 18c and 18d and Fig. 6B is an enlarged plan view of part of each of the magnetic detection elements 19c and 19d. In Figs. 6A and 6B, an X1-X2 direction and a Y1-Y2 direction are two directions orthogonal to each other in a plane.

As illustrated in Fig. 6A, each of the magnetic detection elements 18c and 18d is a meandering element including multiple extending parts 30 which extend in the Y1-Y2 direction. The extending parts 30 are arranged spaced apart in the X1-X2 direction and are joined at both ends in the Y1-Y2 direction so as to form a meandering structure.

In addition, as illustrated in Fig. 6B, each of the magnetic detection elements 19c and 19d is a meandering element including multiple extending parts 31 which extend in the X1-X2 direction. The extending parts 31 are arranged spaced apart in the Y1-Y2 direction and are joined at both ends in the X1-X2 direction so as to form a meandering structure.

Each of the magnetic detection elements 18c and 18d has a shape identical with a shape obtained by rotating the magnetic detection element 19c or 19d by 90° in the plane. Accordingly, the extending parts 30 and 31 constituting the magnetic detection elements have the same width and the spacing between the adjacent extending parts 30 is also the same as that between the adjacent extending parts 31.

The other magnetic detection elements 18a and 18b are meandering elements identical with those as the magnetic detection elements 18c and 18d except for the sensitivity axis direction. In addition, the other magnetic detection elements 19a and 19b are also meandering elements identical with those as the magnetic detection elements 19c and 19d except for the sensitivity axis direction.

Fig. 7 is an enlarged vertical section of part of each of the magnetic detection elements 19c and 19d taken along line VII-VII in Fig. 6B as viewed in a direction of arrows.

Each of the magnetic detection elements 19c and 19d is a self-pinned giant magnetoresistive (GMR) element that is disposed on the substrate 15 and includes a seed layer 2, a fixed magnetic layer 3, a nonmagnetic layer 4, a free magnetic layer 5, and a protective layer 6 in that order from the bottom. The layers constituting the magnetic detection element are deposited by, for example, sputtering.

The seed layer 2 comprises NiFeCr or Cr. An underlying layer that comprises Ta, Hf, Nb, Zr, Ti, Mo, or W may be disposed between the seed layer 2 and the substrate 15.

The fixed magnetic layer 3 has an artificial antiferromagnetic (AAF) structure and includes a first magnetic sublayer 3a, a second magnetic sublayer 3c, and a nonmagnetic intermediate sublayer 3b disposed between the first and second magnetic sublayers 3a and 3c.

In Fig. 7, arrows indicate fixed magnetization directions of the first and second magnetic sublayers 3a and 3c. As illustrated in Fig. 7, the fixed magnetization direction of the first magnetic sublayer 3a is antiparallel to that of the second magnetic sublayer 3c. The first and second magnetic sublayers 3a and 3c each comprise a soft magnetic material, such as CoFe alloy. The nonmagnetic intermediate sublayer 3b comprises Ru or Rh. The nonmagnetic layer 4 comprises a nonmagnetic material, such as Cu. The free magnetic layer 5 comprises a soft magnetic material, such as NiFe alloy. Although the free magnetic layer 5 is a laminate composed of a CoFe alloy sublayer 5a and a NiFe alloy sublayer 5b, the free magnetic layer 5 may have any structure, in this embodiment. The protective layer 6 comprises Ta.

In the embodiment, the fixed magnetic layer 3 has the AAF structure such that the magnetization direction of the first magnetic sublayer 3a is fixed antiparallel to that of the second magnetic sublayer 3c to provide a self-pinned structure. Specifically, the self-pinned structure of Fig. 7 includes no antiferromagnetic layer. Accordingly, the magnetization directions of the first and second magnetic sublayers 3a and 3c constituting the fixed magnetic layer 3 are fixed by deposition in magnetic field without heat treatment in magnetic field (or without annealing; at normal temperature). It is preferred that a force for fixing the magnetization directions of the first and second magnetic sublayers 3a and 3c should have a magnitude enough to prevent magnetization fluctuations even when being affected by an external magnetic field.

The laminated structure of the magnetic detection element in Fig. 7 is an example. The laminated structure may include the free magnetic layer 5, the nonmagnetic layer 4, the fixed magnetic layer 3, and the protective layer 6 in that order from the bottom. The fixed magnetic layer 3 may be configured such that the first magnetic sublayer 3a has a magnetization value equal to that of the second magnetic sublayer 3c and the magnetization directions of the first and second magnetic sublayers 3a and 3c are antiparallel to each other.

The fixed magnetization direction (sensitivity axis direction) of the second magnetic sublayer 3c constituting the magnetic detection element is the fixed magnetization direction of the fixed magnetic layer 3. Accordingly, the sensitivity axis direction P4 of the magnetic detection elements 19c and 19d is a Y2 direction (refer to Fig. 6B).

As illustrated in Fig. 7, the spacing between the adjacent extending parts 31 is filled with an insulating layer 7.

Although the magnetic detection elements 19c and 19d have been described above with reference to Fig. 7, the other magnetic detection elements have the same laminated structure. In this case, each of the sensitivity axis directions P1 to P3 can be determined by controlling the fixed magnetization direction of the second magnetic sublayer 3c constituting the fixed magnetic layer 3.

As described above, since each of the magnetic detection elements 18a to 18d and 19a to 19d is the self-pinned GMR element, heat treatment in magnetic field can be eliminated. Accordingly, the magnetic detection elements 18a to 18d and 19a to 19d having the different sensitivity axis directions P1 to P4 can be arranged on the same substrate 15.

Each of the magnetic detection elements 18a to 18d and 19a to 19d may be a GMR element including an antiferromagnetic layer, although the magnetic detection elements having the different sensitivity axis directions have to be arranged on separate substrates.

Referring to Fig. 1, the first magnetic sensor 12a is spaced apart from the second magnetic sensor 12b by 80° and the second magnetic sensor 12b is also spaced apart from the third magnetic sensor 12c by 80°. A magnetic pole cycle λ (or the width of one pair of the north pole and the south pole, or the length thereof in the moving direction of the magnet 11) is 60°. Accordingly, when the first magnetic sensor 12a is placed at a position C (zero phase-shift position) corresponding to the boundary between the north pole and the south pole, the second magnetic sensor 12b is deviated from a zero phase-shift position D in the clockwise direction CW by 20° and the third magnetic sensor 12c is deviated from a zero phase-shift position E in the clockwise direction CW by 40°. With the configuration in which the magnet 11 is rotatable as illustrated in Fig. 1, the magnetic pole cycle λ is defined by the length of an arc in the relative rotation direction B passing through the centers of the positions of the magnetic sensors 12a to 12c.

As described above, the magnetic sensors 12a to 12c are arranged out of phase with one another. Assuming that the first magnetic sensor 12a is positioned with a phase shift α=0, the second magnetic sensor 12b is positioned with a phase shift of α=(1/3)λ and the third magnetic sensor 12c is positioned with a phase shift of α=(2/3)λ.

In the case where the first magnetic sensor 12a is positioned with the phase shift α=0, each of the second and third magnetic sensors 12b and 12c is positioned with a phase shift of α=(M/N) ·λ, where M denotes a variable in the range of 1 to N-1, N denotes the number of magnetic sensors, and λ denotes the magnetic pole cycle.

As illustrated in Fig. 4A, a U-phase signal (phase signal) a can be obtained from the first output terminal 24 of the first magnetic sensor 12a, a V-phase signal (phase signal) b can be obtained from the first output terminal 24 of the second magnetic sensor 12b, and a W-phase signal (phase signal) c can be obtained from the first output terminal 24 of the third magnetic sensor 12c.

In addition, as illustrated in Fig. 4A, the second output terminals 25 and 26 for the high resolution signal arranged for the magnetic sensors 12a to 12c are connected, thus constituting an external output terminal 42 configured to output a high resolution signal d.

As illustrated in Fig. 4B, the signal output terminals 20a and 21a in the magnetic detection chips 16 and 17 of each of the magnetic sensors 12a to 12c are connected to an OR circuit (logic circuit) 40, thus constituting the second output terminals 25 and 26. The second output terminals 25 and the second output terminals 26 are connected in parallel, thus constituting a wired-OR circuit 41 that functions as an open collector or an open drain.

With the circuit configuration illustrated in Figs. 4A and 4B, the phase signals a, b, and c and the high resolution signal d can be obtained as illustrated in Fig. 5.

In Fig. 5, part (a) illustrates one magnetic pole cycle λ of the magnet 11 illustrated linearly, part (b) illustrates the waveform of the high resolution signal d obtained from the external output terminal 42, part (c) illustrates the waveform of the U-phase signal a, part (d) illustrates the waveform of the V-phase signal b, and part (e) illustrates the waveform of the W-phase signal c.

As illustrated in parts (c), (d), and (e) of Fig. 5, the U-phase signal a, the V-phase signal b, and the W-phase signal c are out of phase from one another. The reason is that the magnetic sensors 12a to 12c are arranged out of phase from one another relative to the magnet 11 as illustrated in Fig. 1.

Referring to Fig. 5, the U-phase signal a (part (c) of Fig. 5) can be obtained from the first magnetic sensor 12a. In addition, medium resolution signals d1 and d2 (refer to part (f) and part (g) of Fig. 5) can be obtained from the second output terminals 25 and 26 of the first magnetic sensor 12a, respectively. As used herein, the term "medium resolution signals" is intended to mean signals obtained from the second output terminals 25 and 26 before the high resolution signal d is obtained as an output of the open collector or open drain. Accordingly, the number of pulses of each of the medium resolution signals d1 and d2 within the magnetic pole cycle λ is less than that of the high resolution signal d. In other words, pulse intervals of the medium resolution signals d1 and d2 are greater than those of the high resolution signal d.

As described with reference to Fig. 4B, each of the signals (medium resolution signals) obtained from the second output terminals 25 and 26 has been processed by the OR circuit (logic circuit) such that pulses have been generated at both rising edges and falling edges of outputs from the signal output terminals 20a and 21a. In addition, there is a phase difference between the medium resolution signal d1 obtained from the second output terminal 25 and the medium resolution signal d2 obtained from the second output terminal 26 because the magnetic detection chips 16 and 17 are arranged spaced apart from each other by the distance T1 as illustrated in Fig. 2. Controlling the distance T1 allows pulses included in the medium resolution signal d1 to be shifted from pulses included in the medium resolution signal d2 at regular intervals. In the embodiment, the distance T1 is (1/8)λ.

As illustrated in Fig. 5, in the second magnetic sensor 12b, the V-phase signal b (refer to part (d) of Fig. 5) can be obtained, and medium resolution signals d3 and d4 (refer to part (h) and part (i) of Fig. 5) can be obtained from the second output terminals 25 and 26, respectively.

Furthermore, as illustrated in Fig. 5, in the third magnetic sensor 12c, the W-phase signal c (refer to part (e) of Fig. 5), and medium resolution signals d5 and d6 (refer to part (j) and part (k) of Fig. 5) can be obtained from the second output terminals 25 and 26, respectively.

As illustrated in Fig. 4B, the medium resolution signals d1 to d6 obtained from the second output terminals 25 and 26 of the magnetic sensors 12a to 12c are output to the open collector or open drain, thus obtaining the high resolution signal d. The high resolution signal d including many pulses within the magnetic pole cycle λ can be obtained in this manner. Referring to Fig. 5, the high resolution signal d includes pulses generated at intervals less than a congruent interval obtained by superposing rising and falling edges a1, a2, b1, b2, c1, and c2 of the U-phase signal a, the V-phase signal b, and the W-phase signal c.

As illustrated in Fig. 5, the high resolution signal d includes 24 pulses in the magnetic pole cycle λ. Accordingly, 144 pulses are generated during one rotation of the magnet 11. In other words, one pulse is output at every rotation angle of 2.5°. In the embodiment, for example, one pulse having a fixed length of 64 µs is generated.

As described above, the acquisition of both the phase signals a to c and the high resolution signal d enables high-accuracy rotation control (current control) by, for example, a brushless motor.

According to the embodiment, the single magnet 11 achieves the acquisition of both the phase signals a to c and the high resolution signal d. In the embodiment, therefore, for example, an optical encoder is not needed to obtain the high resolution signal d, alternatively, another magnet and another magnetic sensor are not needed to obtain the high resolution signal d. This leads to a reduction in the number of components. Thus, the magnetic encoder 10 can be reduced in size and production cost.

Although the three magnetic sensors 12a to 12c are arranged in Fig. 1, two magnetic sensors or four or more magnetic sensors may be arranged. In addition, although the magnetic sensors 12a to 12c each include four channels in the embodiment illustrated in Fig. 1, any number of channels greater than two may be arranged. The number of phase signals can be increased by increasing the number of magnetic sensors and the number of channels, so that the number of pulses in a high resolution signal can be increased.

Although each magnetic detection element used in the embodiment may be a Hall element or the like, a magnetoresistive element (GMR element or a tunneling magnetoresistive (TMR) element) capable of sensing an external magnetic field in a horizontal plane direction relative to the magnetic sensor is preferably used. Here, the term "horizontal plane direction" is intended to mean a direction in a plane parallel to the interface between the adjacent layers in Fig. 7. Additionally, the magnetoresistive element is preferably of the self-pinned type described with reference to Fig. 7. Thus, multiple magnetoresistive elements can be formed on the same substrate 15.

Although the magnet 11 is rotatable in the embodiment, the encoder may be configured such that the magnet 11 is rod-shaped and is movable linearly. Furthermore, the magnet may be fixed and the magnetic detection device may be movable. The magnet may be either of the radial and axial types.

In addition, although the magnetic detection elements having the sensitivity axis directions different from each other by 180° are used in combination in each output circuit, magnetic detection elements having the same sensitivity axis direction and fixed resistive elements may be used in combination.

## Claims

1. A magnetic encoder comprising:
a magnetic field generating member (11) having different magnetic poles magnetized alternately in a moving direction;
a plurality of magnetic sensors (12a, 12b, 12c) arranged spaced apart from one another in a direction parallel to the moving direction, the magnetic sensors (12a, 12b, 12c) being not in contact with the magnetic field generating member (11), wherein the magnetic sensors (12a, 12b, 12c) have different phase positions relative to the magnetic poles of the magnetic field generating member (11); and
a plurality of channels (20, 21) provided for each of the magnetic sensors (12a, 12b, 12c), each channel (20, 21) including a magnetic detection element (18, 19) having an electrical characteristic varying depending on an external magnetic field from the magnetic field generating member (11),
wherein the magnetic field generating member (11) enables a phase signal to be generated from each of the magnetic sensors (12a, 12b, 12c), the phase signals being out of phase, and enables a high resolution signal to be generated based on outputs of the channels (20, 21) such that the high resolution signal includes a plurality of pulses within a wavelength of each phase signal
**characterized in that**
each of the plurality of channels (20, 21) is a bridge circuit comprising four magnetic detection elements (18a-18d, 19a-19d),
each of the magnetic sensors (12a, 12b, 12c) includes
a first output terminal (24) from which an output of any of the channels (20, 21) is taken as the phase signal, and
a second output terminal (25, 26) from which a medium resolution signal is taken, the medium resolution signal being obtained by processing the outputs of the channels (20, 21) through a logic circuit (40), the medium resolution signal having pulse intervals greater than those of the high resolution signal,
wherein the medium resolution signals from the second output terminals (25, 26) are output to an open collector or an open drain to generate the high resolution signal, and
wherein second output terminals (25, 26) of the magnetic sensors (12a, 12b, 12c) are connected to constitute an external output terminal (42) configured to output the high resolution signal.

2. The magnetic encoder according to Claim 1, wherein the high resolution signal includes the pulses at intervals less than a congruent interval obtained by superposing rising edges and falling edges (a1, a2, b1, b2, c1, c2) of the phase signals.

## Patentansprüche

1. Magnetcodierer, aufweisend:
ein Magnetfeld-Erzeugungselement (11) mit unterschiedlichen Magnetpolen, die in einer Bewegungsrichtung wechselnd magnetisiert sind;
eine Mehrzahl von Magnetsensoren (12a, 12b, 12c), die in einer Richtung parallel zu der Bewegungsrichtung voneinander beabstandet angeordnet sind, wobei die Magnetsensoren (12a, 12b, 12c) nicht mit dem Magnetfeld-Erzeugungselement (11) in Kontakt stehen, wobei die Magnetsensoren (12a, 12b, 12c) unterschiedliche Phasenpositionen relativ zu den Magnetpolen des Magnetfeld-Erzeugungselements (11) aufweisen; und
eine Mehrzahl von Kanälen (20, 21), die für jeden der Magnetsensoren (12a, 12b, 12c) vorgesehen sind, wobei jeder Kanal (20, 21) ein magnetisches Detektionselement (18, 19) mit einer elektrischen Charakteristik aufweist, die abhängig von einem externen Magnetfeld von dem Magnetfeld-Erzeugungselement (11) variiert,
wobei das Magnetfeld-Erzeugungselement (11) ermöglicht, dass ein Phasensignal von jedem der Magnetsensoren (12a, 12b, 12c) erzeugt wird, wobei die Phasensignale phasenverschoben sind, sowie ermöglicht, dass ein Signal mit hoher Auflösung auf der Basis von Ausgangssignalen der Kanäle (20, 21) erzeugt wird, so dass das Signal mit hoher Auflösung eine Mehrzahl von Pulsen innerhalb einer Wellenlänge jedes Phasensignals beinhaltet,
**dadurch gekennzeichnet,**
**dass** es sich bei jedem der mehreren Kanäle (20, 21) um eine Brückenschaltung handelt, die vier magnetische Detektionselemente (18a-18d, 19a-19d) aufweist,
**dass** jeder der Magnetsensoren (12a, 12b, 12c)
einen ersten Ausgangsanschluss (24), von dem ein Ausgangssignal von einem beliebigen der Kanäle (20, 21) als Phasensignal abgenommen wird, und
einen zweiten Ausgangsanschluss (25, 26) aufweist, von dem ein Signal mit mittlerer Auflösung abgenommen wird, wobei das Signal mit mittlerer Auflösung durch Verarbeiten der Ausgangssignale der Kanäle (20, 21) durch eine Logikschaltung (40) gebildet wird, wobei das Signal mit mittlerer Auflösung Pulsintervalle aufweist, die größer sind als die des Signals mit hoher Auflösung,
wobei die Signale mit mittlerer Auflösung von den zweiten Ausgangsanschlüssen (25, 26) an einen offenen Kollektor oder einen offenen Drain abgegeben werden, um das Signal mit hoher Auflösung zu erzeugen, und
wobei zweite Ausgangsanschlüsse (25, 26) der Magnetsensoren (12a, 12b, 12c) verbunden sind, um einen externen Ausgangsanschluss (42) zu bilden, der zum Abgeben des Signals mit hoher Auflösung ausgebildet ist.

2. Magnetcodierer nach Anspruch 1,
wobei das Signal mit hoher Auflösung die Pulse in Intervallen aufweist, die kleiner als ein kongruentes Intervall sind, das man durch Überlagern von Anstiegsflanken und Abfallflanken (a1, a2, b1, b2, c1, c2) der Phasensignale erhält.

## Revendications

1. Encodeur magnétique comprenant :
un élément (11) générant un champ magnétique possédant des pôles magnétiques différents magnétisés en alternance dans une direction de déplacement ;
une multitude de capteurs magnétiques (12a, 12b, 12c) disposés à l'écart les uns des autres dans une direction parallèle à la direction de déplacement, les capteurs magnétiques (12a, 12b, 12c) n'entrant pas en contact avec l'élément (11) générant un champ magnétique ; dans lequel les capteurs magnétiques (12a, 12b, 12c) possèdent différentes positions de phases par rapport aux pôles magnétiques de l'élément (11) générant un champ magnétique ; et
une multitude de canaux (20, 21) prévus pour chacun des capteurs magnétiques (12a, 12b, 12c), chaque canal (20, 21) englobant un élément de détection magnétique (18, 19) possédant une caractéristique électrique qui varie en fonction d'un champ magnétique externe de l'élément (11) générant un champ magnétique ;
dans lequel l'élément (11) générant un champ magnétique permet de générer un signal de phase à partir de chacun des capteurs magnétiques (12a, 12b, 12c), les signaux de phases étant déphasés, et permet de générer un signal à haute résolution en se basant sur des sorties des canaux (20, 21) d'une manière telle que le signal à haute résolution englobe une multitude d'impulsions au sein d'une longueur d'onde de chaque signal de phase ;
**caractérisé en ce que**
chacun desdits plusieurs canaux (20, 21) représente un circuit en pont comprenant quatre éléments de détection magnétique (18a-18d, 19a-19d) ;
chacun des capteurs magnétiques (12a, 12b, 12c) englobe :
une première borne de sortie (24) à partir de laquelle une sortie de l'un quelconque des canaux (20, 21) est extraite à titre de signal de phase ; et
une seconde borne de sortie (25, 26) à partir de laquelle un signal à résolution moyenne est extrait, le signal à résolution moyenne étant obtenu en traitant les sorties des canaux (20, 21) à travers un circuit logique (40), le signal à résolution moyenne possédant des intervalles d'impulsions supérieurs à ceux du signal à haute résolution ;
dans lequel les signaux à résolution moyenne extraits des secondes bornes de sortie (25, 26) sont transmis à un collecteur ouvert ou à un drain ouvert afin de générer le signal à haute résolution ; et
dans lequel des secondes bornes de sortie (25, 26) des capteurs magnétiques (12a, 12b, 12c) sont reliées pour constituer une borne de sortie externe (42) configurée pour transmettre le signal à haute résolution.

2. Encodeur magnétique selon la revendication 1, dans lequel le signal à haute résolution englobe les impulsions à des intervalles inférieurs à un intervalle congruent que l'on obtient par superposition des flancs montants et des flancs descendants (a1, a2, b1, b2, c1, c2) des signaux de phases.
